# EUROPEAN PATENT APPLICATION

(11) **EP 1 582 246 A1**
(43) Date of publication of application: **05.10.2005**
(21) Application number: 04005993.3
(22) Date of filing: 12.03.2004
(51) Int. Cl.: B01D 19/00

(54) **Degasification of liquid yeast**

(71) Applicant: LESAFFRE et Cie, 75001 Paris (FR)
(72) Inventor: Blomme, Karel Alfons Frans, 9940 Evergem (BE)

(57) **Abstract**

An apparatus is disclosed for degassing liquid yeast (LY) and comprises a cyclone separator (16) having a liquid yeast inlet (30), a liquid yeast outlet (70) and a gas outlet (48). The liquid yeast inlet is arranged in use to introduce a vortex (V1) of liquid yeast into the cyclone separator and the liquid yeast outlet is configured for the removal of said liquid yeast from the cyclone separator after degasification. In a preferred embodiment, the cyclone separator comprises a first cyclone separation chamber (58) in fluid communication with a second cyclone separation chamber (64). A liquid yeast flow path through the cyclone separator passes through first and second degasification stages via the first and second cyclone separation chambers respectively.

## Description

### FIELD OF THE INVENTION

The present invention relates to liquid yeast, and in particular to the degasification of liquid yeast.

### BACKGROUND TO THE INVENTION

Liquid yeast is a liquid suspension of live yeast cells, the suspension also being referred to as cream yeast. It is generally known in the art of bread making to use baker's yeast in the form of such a liquid yeast as a leavening agent for dough.

As discussed in EP-A-0792930, liquid yeast shows a certain level of activity during transport and storage. This results in the production of CO₂ gas by the yeast, which can build up in the container or installation. Consequently, it has been proposed in EP-A-0792930 to provide the liquid yeast container with a vent for keeping the container at atmospheric pressure and to install a degasification valve onto the pipe through which the liquid yeast is transported.

The applicants have found that, in practice, these known measures for degassing liquid yeast are not always sufficient, in particular when the liquid yeast is of a highly active type. There is therefore a continuing need to seek improved ways of degasifying liquid yeast.

### SUMMARY OF THE INVENTION

It is an object of the present invention to provide an improved apparatus and process for the degasification of liquid yeast, in particular at a bakery.

The liquid yeast for use in the present invention may be obtained in many ways. One example would be a liquid yeast obtained in a known manner after separation of a yeast biomass from its liquid culture medium, such separation typically being performed by centrifugation, with or without one or more washing and/or concentration steps. Another example, also non-limiting, would be a liquid yeast obtained by liquid suspension of pressed, crumbled or dry active yeast, or a liquid yeast obtained by liquefaction of pressed or crumbled yeast using an osmotic agent. The liquid yeast can be stabilised by means of a food thickening or stabilising agent. Furthermore, the yeast can be high, standard or low activity yeast and/or a freeze-tolerant yeast.

According to the present invention, there is provided an apparatus for degassing liquid yeast, characterised in that the apparatus comprises a cyclone separator having a liquid yeast inlet, a liquid yeast outlet and a gas outlet, said liquid yeast inlet being arranged in use to introduce a vortex of liquid yeast into said cyclone separator and said liquid yeast outlet being configured for the removal of said liquid yeast from said cyclone separator after degasification.

It is an advantage of the present invention that the liquid yeast being handled is efficiently degassed using an apparatus that is cheap to install and maintain whilst providing robust hygiene.

Said liquid yeast outlet may be configured to maintain or reinforce said vortex of liquid yeast.

Said cyclone separator may comprise a first cyclone separation chamber in fluid communication with a second cyclone separation chamber, a liquid yeast flow path through said cyclone separator passing through first and second degasification stages via said first and second cyclone separation chambers respectively.

Said liquid yeast inlet may enter said first cyclone separation chamber and said liquid yeast outlet may leave said second cyclone separation chamber. Said liquid yeast outlet may be configured to maintain or reinforce the vortex of liquid yeast in said second cyclone separation chamber.

One said cyclone separation chamber may be at least partially housed within the other cyclone separation chamber, said first cyclone separation chamber preferably being of a smaller outer diameter than the second cyclone separation chamber and most preferably being disposed substantially concentrically within said second cyclone separation chamber.

At least one, and preferably both, of said liquid yeast inlet and said liquid yeast outlet may respectively join or leave said cyclone separation chamber tangentially.

Flow guide means may be provided that are arranged in use to direct the flow of said liquid yeast from said first to said second cyclone separation chamber while maintaining the vortex, said flow guide means comprising for example one or more vanes. The angle at which said vanes are disposed may be fixed or may be variable.

Said liquid yeast inlet and said liquid yeast outlet may be disposed in the region of a lower end of said first and second cyclone separation chambers respectively.

Said fluid communication may be achieved by means of an overflow from said first cyclone separation chamber into said second cyclone separation chamber, said overflow being performed in an overflow region and said gas outlet preferably being operatively connected with said overflow region.

Said apparatus may further comprise a control means for restricting the level of liquid yeast in the cyclone separator, said control means preferably being integrated with said gas outlet. Said control means may be static or dynamic. Said control means may comprise a sleeve member that is held over and extends below a lower end of a gas escape pipe that extends into the upper region of the cyclone separator, said sleeve member having an internal diameter that is larger than the external diameter of said gas outlet pipe such that a cylindrically extending gap is defined therebetween, whereby said gap provides an escape passage for gas in said cyclone separator to pass over the top of said sleeve member, down the gap, around the bottom of the gas outlet pipe and then up said gas outlet pipe for pressure release. The sleeve member may be closed at its lower end apart from one or more passages therethrough, said passages providing a restricted bleed for liquid yeast into and out of said gas outlet pipe so as to facilitate one and preferably both of filling and level control of said liquid yeast during use of said cyclone separator. Said control means may be adapted to shut off gas release from said cyclone separator in the event that the level of said liquid yeast in said cyclone separator exceeds a preset limit, whereby a build up of gas pressure in said cyclone separator will assist in the removal of liquid yeast out of said liquid yeast outlet and thereby form part of the liquid yeast level control arrangement. The use of a static system is preferred because it is cheap to install, has no moving parts, is easy to maintain and is easy to keep hygienic.

An alternative level control means may comprise one or more level sensors arranged in use to provide to a control device a signal indicative of the level of liquid yeast in said cyclone separator, said control device being configured to control a gas release device such as a release valve in response to said signal, whereby gas pressure may be controlled in said cyclone separator so as to assist in the removal of liquid yeast therefrom. Depending on the sophistication of the sensing equipment chosen, this can provide active control of liquid yeast levels and lends itself well in particular to a negative feedback system offering the advantage of rapid response and accuracy.

A further version of level control means may comprise a float valve configured to shut off gas release when a level of said liquid yeast rises to a preset limit, whereby gas pressure may be controlled in said cyclone separator so as to assist in the removal of liquid yeast therefrom. This system is simple and cheap to install.

At least one, and preferably both, of said cyclone separation chambers may be provided with a drain means for draining liquid from said chamber. This arrangement may be used in particular during emptying and cleaning operations so as to drain first residual liquid yeast and then afterwards cleaning fluids. The drainage of residual liquid yeast from the first cyclone separation chamber may be performed through a cut-out, such that after a degassing run the residual liquid yeast drains therefrom into said second cyclone separation chamber for final drainage out of the cyclone separator via the liquid yeast outlet thereof. For cleaning-in-place, the first cyclone separation chamber may be supported on one or more feet members configured to raise it a short distance above the floor of the cyclone separator. That distance is preferably only large enough to facilitate the drainage of the cleaning fluid but not large enough to allow significant drainage of liquid yeast during degassing runs, e.g. a rise of say 3mm.

The present invention also provides the use of an apparatus according to the present invention in an installation for handling liquid yeast, for example the use thereof in a bakery installation configured for the production of bread.

The present invention also provides a process for degassing liquid yeast, the process including:
a) introducing a flow of liquid yeast into a cyclone separation chamber in such a manner as to generate a vortex thereof so as to subject said liquid yeast to a degasification stage; and
b) removing said liquid yeast from said cyclone separation chamber after it has passed through said degasification stage.

The process may include introducing said flow of liquid yeast into a first cyclone separation chamber so as to subject said liquid yeast to a first degasification stage, then transferring said flow from said first cyclone separation chamber into a second cyclone separation chamber so as to subject said liquid yeast to a second degasification stage, and removing said liquid yeast from said second cyclone separation chamber after it has passed through said second degasification stage.

### BRIEF DESCRIPTION OF THE DRAWINGS

The present invention will now be described by way of example only and with reference to the accompanying drawings, in which;
Figure 1 is a schematic diagram of an installation for handling liquid yeast according to an embodiment of the present invention;
Figure 2 is a section through a degasification apparatus forming part of the installation in Figure 1;
Figure 3 is a plan view of an installation as illustrated in Figure 2, but equipped for two parallel liquid yeast storage tanks;
Figure 4 is a schematic diagram representing level control of liquid yeast in the apparatus illustrated in Figure 1;
Figure 5 is a detailed view of part of the apparatus used in the embodiment of Figure 4;
Figure 6 is another embodiment of the arrangement of Figure 4.

### DETAILED DESCRIPTION OF A PREFERRED EMBODIMENT

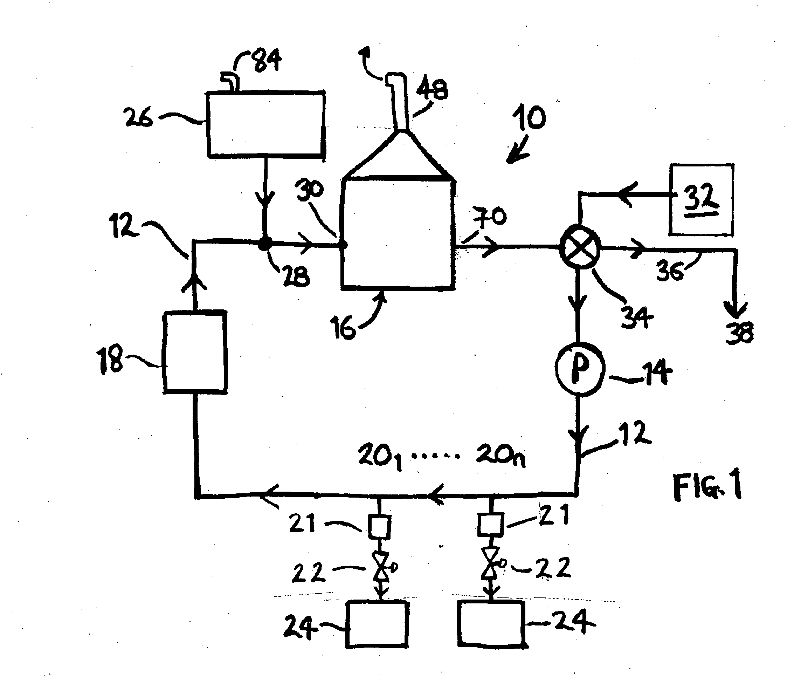

Referring to the drawings and in particular for the moment to Figure 1, an installation 10 for handling liquid yeast LY includes a liquid yeast handling loop 12 in which a pump 14 is configured to circulate liquid yeast LY supplied in a degasified state from a degasification apparatus 16, which is in the form of a cyclone separator and will be referred to for convenience as a degaspot 16.

The pump 14 is advantageously placed in the loop 12 at a position not far downstream from the exit of the degaspot 16, where it can expect the lowest risk of cavitation from the low levels of residual gas bubbles in the degasified liquid yeast LY or from new bubbles introduced further around the loop 12.

Further around the loop 12 and upstream from the degaspot 16, the liquid yeast LY is passed through a cooler 18. The purpose of the cooler 18 is to cool the liquid yeast LY so as to compensate for heat introduced for example by the pump 14 or from the environment. The cooler 18 may comprise for example a liquid-to-liquid heat exchanger, although use of extra cooling media such as melting ice may prove desirable depending on any particular installation.

Thus the basic loop 12 can be seen to comprise a degaspot 16, a pump 14 and a cooler 18 and liquid yeast LY may be circulated around this loop 12 substantially continuously during production periods. One or more dosing points (20₁, to 20ₙ) are provided in the loop 12, preferably between the pump 14 and the cooler 18, and are used to feed consumer equipment with liquid yeast LY in a degasified form. These dosing points 20₁₋ₙ typically each comprise a bleed-off from the loop 12 comprising a meter 21 for measuring the amount of liquid yeast to be removed for use and a liquid yeast dosing valve 22 piped for example straight into a dough mixing apparatus 24 of a bakery for use in the production of a food product such as bread.

In order to compensate for degasified liquid yeast LY that is withdrawn from the loop 12, a top-up facility is provided. This may conveniently comprise a vented liquid yeast storage tank 26 that is configured to supply liquid yeast LY into the loop 12 by, for example, a venturi apparatus 28 positioned between the cooler 18 and the inlet 30 to the degaspot 16. A butterfly shut-off valve 29 is positioned between the liquid yeast storage tank 26 and the venturi apparatus 28.

For hygiene, a "clean-in-place" (CIP) is provided in the form of a cleaning apparatus 32 that is configured to feed a cleaning agent into the loop 12 at a cleaning point 34 and includes a bleed-off 36 for subsequent removal of cleaning and flushing fluids to a drainage system 38.

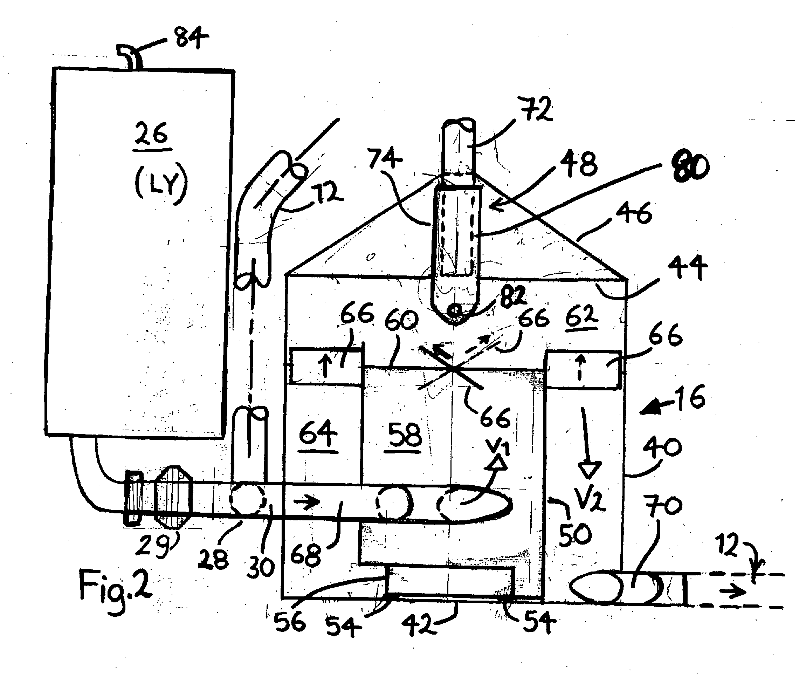

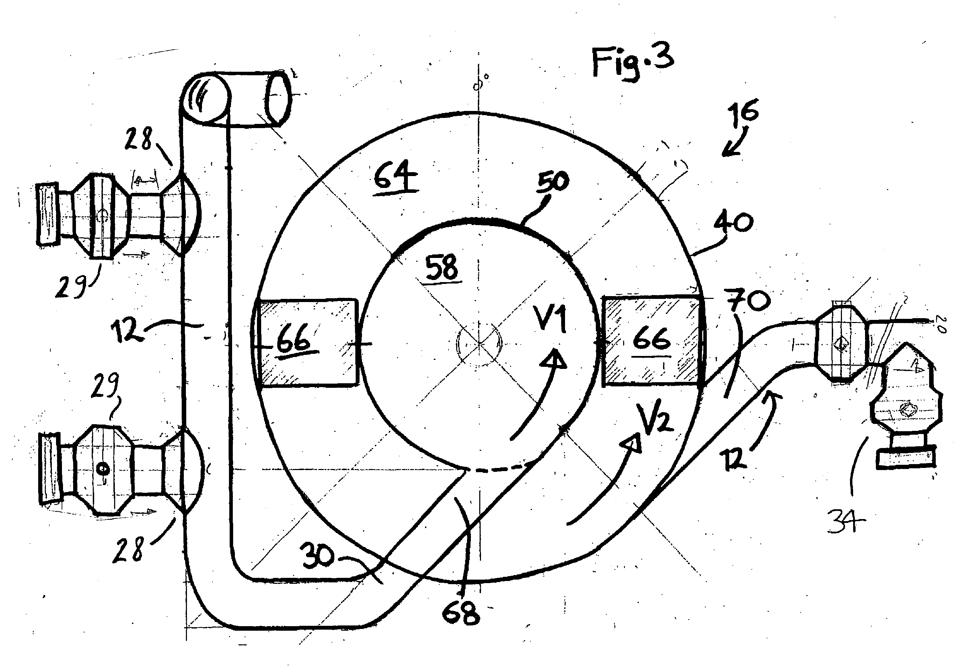

Referring now in particular to Figures 2 to 5, the structure and functioning of the degaspot 16 will be described in greater detail for a non-limiting preferred embodiment. The degaspot 16 comprises a cylindrical outer shell 40 upstanding from a floor 42 and having an upper rim 44 along which the outer shell 40 joins a conical roof 46. Sited in the point of the conical roof 46 is a gas outlet device 48.

The outer shell 40 of the degaspot 16 houses a cylindrical inner shell 50, which is open at each end and which is disposed concentrically within the outer shell 40. A lower rim 52 of the inner shell sits on a series of feet members 54 that raise the lower rim 52 a short distance above the floor 42. Furthermore, a cut out 56 is provided for a sector around the lower end of the inner shell 50. The feet members 54 raise the inner shell 50 by enough to leave a gap between it and the floor 42 which is big enough for cleaning fluid to pass through but small enough to make it difficult for liquid yeast LY to take the same route out of a first or inner cyclone separation chamber 58 defined by that inner shell 50. The gap may comprise say 3mm. The sector 56 cut out of the inner shell 50, however, is specifically configured to allow residual liquid yeast LY to drain out of the inner shell 50 when the degaspot 16 is not in use, e.g. to drain residual liquid yeast into the chamber 64 defined between the shells 40, 50. These measures help reduce the chances of small quantities of liquid yeast LY being trapped in the degaspot 16 and posing a potential hygiene problem, whilst also aiding cleaning. The sector 56 likewise allows cleaning liquid to drain out of the inner shell 50 after cleaning.

The open upper rim 60 of the inner shell 50 stops at a lower level than the upper rim 44 of the outer shell 40. Because of the difference in height between the inner and outer shells 50, 40, a space is defined above the upper rim 60 of the inner shell 50 and the upper rim 44 of the outer shell 40. The space between the rims 44, 60 of the two shells 40, 50 will be referred to for convenience as an overflow region 62 for reasons that will become clear below. A second or outer cyclone separation chamber 64 is defined between the inner and outer shells 40, 50.

A flow guide means is disposed on or around the upper rim 60 of the inner shell 50 in the form of one or more vanes 66, preferably a series of them equispaced and each one substantially planar. The or each vane 66 is configured and positioned to deflect liquid yeast LY coming out of the first chamber 58 such that the liquid yeast LY changes axial direction in the overflow region 62 and is deflected into the opposite axial direction into the second chamber 64. In the illustrated embodiment, the vanes 66 are set at an acute angle with respect to the incidence of the liquid yeast LY and the effect is that liquid yeast LY rising upwards through the first chamber 58 is deflected downward by overflow in the overflow region 62. The result is that the flow of liquid yeast LY then travels in a downwards direction in the second chamber 64 and ultimately towards an exit that lets degasified liquid yeast LY out of that second chamber 64 and into the loop 12 upstream of the pump 14.

Turning now to the inlet 30 of the degaspot 16, an inlet pipe 68 from the loop 12 passes from outside the degaspot 16 through the outer shell 40 and joins the inner shell 50 tangentially. The exit from the second chamber 64 is in the form of an outlet pipe 70 that leaves the lower end of the outer shell 40 and provides a tangential exit path out of the degaspot 16 for degasified yeast to continue around the rest of the loop 12.

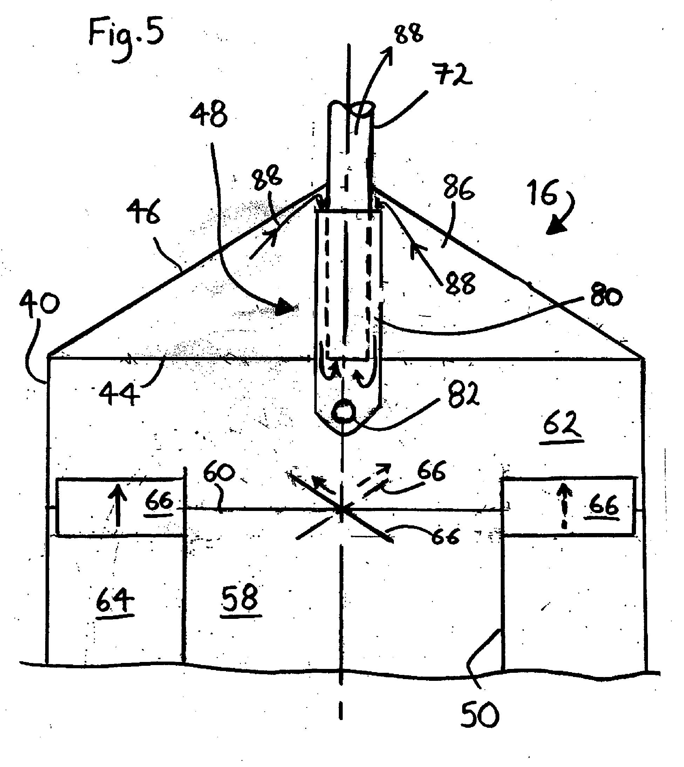

The volume of gas for release will build up in particular through separation of carbon dioxide CO₂ from the liquid yeast LY in accordance with the degasification process implemented using the system of the present invention and as described in detail further below. Turning for the moment to the gas outlet device 48, the structure of an exemplary gas outlet device 48 will now be described with particular reference to Figure 5.

The gas outlet device 48 has as its primary function the release of gas from the degaspot 16 and in a preferred embodiment comprises a static device, static arrangements being preferred for low cost manufacturing, no moving parts that might otherwise cause running or hygiene problems and consequently low cost maintenance. The gas outlet device 48 in this first embodiment comprises a gas outlet pipe 72, over the lower end of which a tubular sleeve 74 is provided. The gas outlet pipe 72 extends part way into an upper region of the degaspot 16, where gas released by the liquid yeast LY will accumulate. In the example illustrated in Figures 2 to 5, the pipe 72 stops about level with the upper rim 44 of the outer shell 40.

The tubular sleeve 74 has an inner diameter that is larger than the outer diameter of the gas outlet pipe 72 and is attached concentrically to the exterior of that pipe 72, e.g. by welded lugs or spacers, such that the resultant cylindrically extending gap defines a passage 80 circular in cross-section between the sleeve 74 and the pipe 72. The lower end of the sleeve 74 is crimped closed, or otherwise blocked off, with opposing small diameter holes 82 being defined through the lower end of the sleeve 74. The gas outlet device 48 doubles-up as a statically disposed level control means to regulate the volume of liquid yeast LY in the degaspot 16.

In operation the pump 14 drives liquid yeast LY into the first chamber 58. At this stage the liquid yeast LY already in the loop 12 has been cooled by the cooler 18 and top-up liquid yeast LY fed into the loop 12 from the storage tank 26 can be expected to be reasonably cool from its bulk storage. The momentum of the liquid yeast LY entering the first (inner) chamber 58 combined with its tangential entry in a controlled flow from the inlet pipe 68 swirls the liquid yeast LY around and generates a first stage of liquid vortex V1. The positioning and configuration of the vanes 66 is arranged in use to intercept the vortex V1 and to deflect it through the overflow region 62 such that it doubles back axially and continues in the form of a second stage of liquid vortex V2 travelling down through the second (outer) chamber 64.

Sufficient G-forces are generated in each vortex stage V1, V2 for a phase of gas separation to take place in each cyclone separation chamber 58, 64 and the present invention uses this general principle in a new application specifically directed to solving the problem of the degasification of liquid yeast LY. The first vortex V1 travels at high speed, whereas the second vortex V2 travels at a somewhat lower speed. It will be appreciated that the actual speeds or volumetric flow rates involved depend on such factors as pump design and scale of the overall operation.

In the embodiment illustrated, the second vortex V2 will travel at a lower speed as the same volume of liquid is travelling a longer path in the second (outer) cyclone separation chamber 64 in the form of the second vortex V2. It may be noted, however, that a single cyclone separation chamber may be used for cyclonic separation of the gas. The use of the tangential exit path ensures that the liquid yeast outlet 70 is configured to maintain or reinforce the vortex of liquid yeast in the second cyclone separation chamber.

A further advantage of double cyclone separation chambers 58, 64, however, is that the arrangement allows a particularly compact design of degaspot 16 when used with concentric cyclone separation chambers 64, 58 housed one within the other. It will however be appreciated that in variations to the present invention the double stage vortex principal may be implemented with axially disposed but non-concentric cyclone separation chambers. Furthermore, variations in any embodiment may reverse the role of the inner and outer cyclone separation chambers 64, 58 such that the first liquid vortex V1 travels up the outer chamber 64 and is deflected back on itself such that the second liquid vortex V2 is generated travelling down the inside of the inner chamber 58, the disposition of the various equipment involved being altered accordingly.

The use of the vortex principle, in particular with double cyclone separation chambers 58, 64, permits the provider of the degasification installation to avoid the use of mechanically driven agitators, e.g. stirring apparatus, acting directly on the liquid yeast LY. Apart from saving costs, there is always the chance with many such mechanically or electrically driven apparatus that contamination might creep into the liquid yeast LY from, for example, leaking seals. The use of a static installation therefore has the further advantage of robust hygiene and this is made all the more practical by the high efficiency of the degasification offered by the use of first and second cyclone separation chambers 58, 64 that are in axial liquid communication with each other, preferably concentrically so. The degaspot 16 and the loop 12 are designed for minimal dead leg and optimal cleaning.

To fill the degaspot 16 from empty, the yeast container 26 is opened into fluid communication with the loop 12. Liquid yeast LY flows into the degaspot 16 filling both the chambers 58, 64 until the level of liquid yeast LY reaches the gas outlet pipe 72.

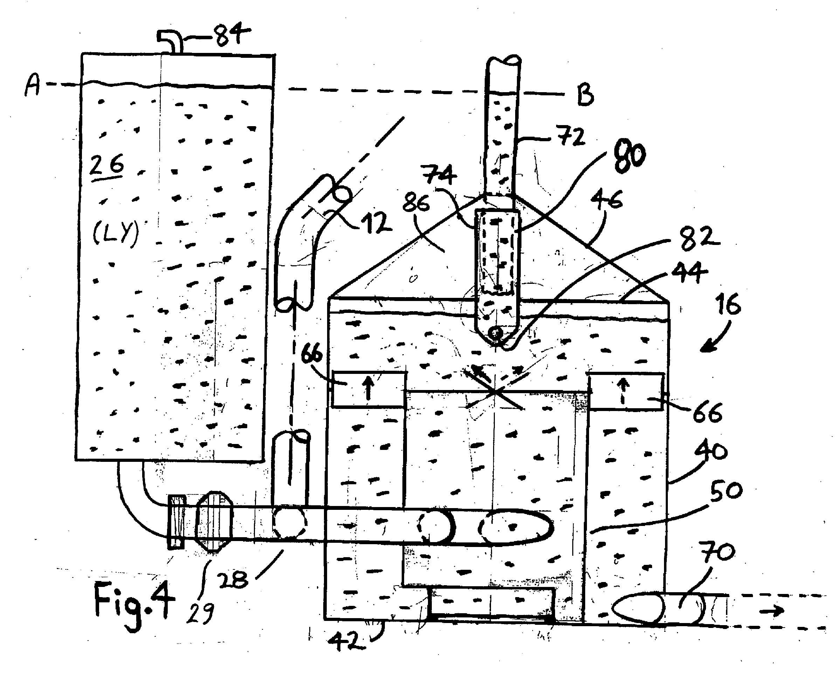

During normal degassing operation the level control means has no active function, that level control means comprising the tubular sleeve 74 integrated with the gas outlet pipe 72 so as to form the gas outlet device 48. The holes 82 are submerged and allow liquid yeast LY to rise up the gas outlet pipe 74 creating a pressure-head of liquid yeast LY (see in particular Figure 4). The liquid yeast LY will rise to the same level as the liquid yeast LY in the storage tank 26 by equalisation (levels A, 26 and B, 72), facilitated by the open top to the gas outlet pipe 72 and a vent 84 in the storage tank 26. Thus the level B of liquid yeast LY in the gas outlet pipe 72 will equalise with the level A in the tank 26, the liquid yeast LY draining down from the gas outlet pipe 72 via the holes 82 as the level in the tank 26 drops through dosing of degasified liquid yeast LY.

The gap 80 provides an escape passage (indicated by arrows 88) for gas 86 accumulated in the cyclone separator 16 to pass over the top of the sleeve 74, down the gap 80, around the bottom of the gas outlet pipe 72 and then up the gas outlet pipe 72 for pressure release.

If the level of liquid yeast were to rise above the bottom of the gas outlet pipe 72, , this blocks off any escape passage for the trapped gases 86. These gasses accumulate and are compressed up to the point at which the pressure created by that compression exceeds the pressure of the rising liquid yeast LY, whereupon the level of the liquid yeast LY is forced downwards. This automatically controls the maximum volume of liquid yeast LY in the degaspot 16 and does so using a cheap and simple arrangement 72, 74. The back pressure created prevents the liquid yeast LY rising further and assists in the removal of the liquid yeast LY via the tangential exist passage 70.

Once the level of the liquid yeast LY drops below the bottom of the gas outlet pipe 72, the trapped gases 86 can escape once more up over the top of the tubular sleeve 74, down the gap between that sleeve 74 and the pipe 72 and they can then double-back around the bottom of the gas outlet pipe 74 and escape up it for release.

In a first of two further non-limiting embodiments to the gas outlet device with integrated level control (not illustrated), a ball valve floats on the surface of the liquid yeast LY and is used to shut off a hemispherical seat formed at the bottom of the gas outlet pipe 72. This float valve arrangement traps gas 86 in the domed roof 46 and gas compression co-operates with the ball valve and seat to set a maximum level of liquid yeast LY in the degaspot 16.

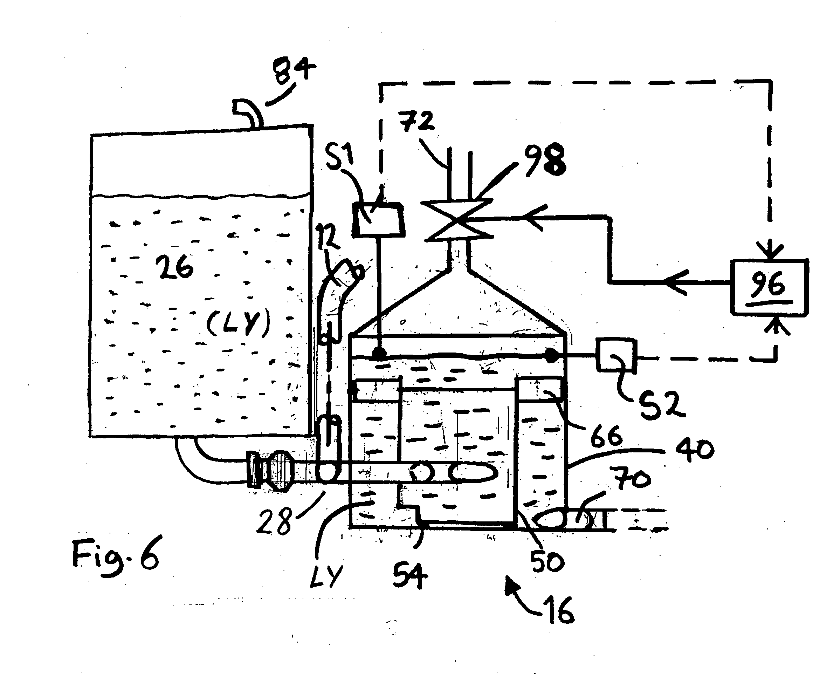

In the second of said two further embodiments, illustrated in Figure 6, a level sensing system (S1, S2, 96) is used to detect the level of liquid yeast LY in the degaspot 16. A sensing arrangement S1, S2, provides a control device 96 with an indication of the level of liquid yeast LY in the degaspot 16. In normal operation, the system is dormant and gas 86 can pass up the gas outlet pipe 72. If, however, the level of liquid yeast LY exceeds a predetermined limit, the control device 96 is awoken and shuts off gas release, e.g. it causes a valve 98 in the gas outlet pipe 72 to close. This valve 98 may conveniently comprise a one way valve for gas outlet and be held normally-open for gas release but configured to be closed under negative feedback control implemented by the control device 96 if liquid yeast LY becomes excessive. The sensing arrangement may comprise for example a simple two prong resistive set up, in which first and second sensors S1 and S2 measure resistance between themselves. Liquid Yeast LY and the released gases 86 having different resistances, a noticeable change will occur when the level of liquid yeast LY rises high enough to short circuitry across the sensors S1, S2. For at least a period during cleaning of the installation, valve 98 is open, so that the entire degaspot, including the gas outlet pipe, can be flushed with cleaning liquid. This is a cheap and fairly robust arrangement and could be used with a control device 96 embodied simply as an amplifier. This would be cheaper and simpler than using some sensing devices such as optical or piezo-electric level sensors due to the cost of such equipment and its associated processing needs. In any case, the arrangements of embodiments including moving and/or contacting parts, as for example illustrated in Figure 6 are less preferred than the static level control means of Figures 4 and 5.

The degaspot 16 of the present invention lends itself well to cleaning-in-place (CIP). This is important in installations for handing this type of product used in food preparation. In particular, the provision of the outer tubular sleeve 74, substantially closed at it's lower end, permits efficient washing by pumping in cleaning fluid at a rate faster than can be passed through the holes 82. This means the cleaning fluid cannot all pass straight up the gas outlet pipe 72, as would happen if there was no semi-closed sleeve 74 over it. Thus the cleaning fluid rises up the inside surface of conical roof 46 and passes down the passage 820 between the pipe 72 and the sleeve 74 and does its job particularly thoroughly.

Thus it can be seen that the present invention provides an apparatus, an installation and a method of handing liquid yeast that allows its degassing in a cheap and effective manner, while doing so using means and steps whose very simplicity contributes to the reliability and ease of care for hygiene.

## Claims

1. Apparatus for degassing liquid yeast, **characterised in that** the apparatus comprises a cyclone separator (16) having a liquid yeast (LY) inlet (30), a liquid yeast outlet (70) and a gas outlet (48), said liquid yeast inlet being arranged in use to introduce a vortex (V1) of liquid yeast into said cyclone separator and said liquid yeast outlet being configured for the removal of said liquid yeast from said cyclone separator after degasification.

2. Apparatus according to claim 1, wherein at least one, and preferably both, of said liquid yeast (LY) inlet and said liquid yeast outlet respectively join or leave said cyclone separation chamber tangentially.

3. Apparatus according to claim 1, wherein said cyclone separator comprises a first cyclone separation chamber (58) in fluid communication with a second cyclone separation chamber (64), a liquid yeast (LY) flow path through said cyclone separator passing through first and second degasification stages via said first and second cyclone separation chambers respectively.

4. Apparatus according to claim 3, wherein said liquid yeast (LY) inlet enters said first cyclone separation chamber and said liquid yeast outlet leaves said second cyclone separation chamber, said liquid yeast outlet being configured to maintain or reinforce the vortex (V2) of liquid yeast in said second cyclone separation chamber.

5. Apparatus according to claim 3 or claim 4, wherein one said cyclone separation chamber (58) is at least partially housed within the other cyclone separation chamber (64), said first cyclone separation chamber (58) preferably being of a smaller outer diameter than the second cyclone separation chamber (64) and most preferably being disposed substantially concentrically with said second cyclone separation chamber.

6. Apparatus according to any one of claims 3 to 5,
• wherein said liquid yeast (LY) inlet (30) joins said first cyclone separation chamber (58) tangentially, or
• wherein said liquid yeast (LY) outlet (70) leaves said second cyclone separation chamber (64) tangentially,
and preferably both.

7. Apparatus according to any one of claims 3 to 6, wherein flow guide means (66) are provided that are arranged in use to direct the flow of said liquid yeast (LY) from said first (58) to said second (64) cyclone separation chamber while maintaining the vortex (V1, V2), said flow guide means comprising for example one or more vanes.

8. Apparatus according to any one of claims 3 to 7, wherein said liquid yeast (LY) inlet (30) and said liquid yeast outlet (70) are disposed in the region of a lower end of said first (58) and second (64) cyclone separation chambers respectively.

9. Apparatus according to any one of claims 3 to 8, wherein said fluid communication is achieved by means of an overflow from said first cyclone separation chamber (58) into said second cyclone separation chamber (64), said overflow being performed in an overflow region (62) and said gas outlet (48) preferably being operatively connected with said overflow region.

10. Apparatus according to any one of claims 3 to 9, wherein at least one, and preferably both, of said cyclone separation chambers (58) is provided with a drain means (56, 54) for draining liquid from said chamber.

11. Apparatus according to any preceding claim, further comprising a control means (48) for restricting the level of liquid yeast (LY) in the cyclone separator (16), said control means preferably being integrated with said gas outlet and more preferably comprising a static control means.

12. Use of an apparatus according to any preceding claim in an installation (10) for handling liquid yeast (LY), for example the use thereof in a bakery installation configured for the production of bread.

13. Process for degassing liquid yeast, the process including:
a) introducing a flow of liquid yeast (LY) into a cyclone separation chamber (58) in such a manner as to generate a vortex (V1) thereof so as to subject said liquid yeast to a degasification stage; and
b) removing said liquid yeast from said cyclone separation chamber (58) after it has passed through said degasification stage.

14. Process according to claim 13, including introducing said flow of liquid yeast (LY) into a first cyclone separation chamber (58) so as to subject said liquid yeast to a first degasification stage (V1) and then transferring said flow from said first cyclone separation chamber into a second cyclone separation chamber (64) so as to subject said liquid yeast to a second degasification stage (V2).
